(19) Europäisches Patentamt
European Patent Office
Office européen des brevets

(11) EP 0 609 454 B1

(12) # EUROPEAN PATENT SPECIFICATION

(45) Date of publication and mention of the grant of the patent:
**22.10.1997 Bulletin 1997/43**

(21) Application number: **93913605.7**

(22) Date of filing: **29.06.1993**

(51) Int Cl.6: **C08F 2/38**, C08F 20/38, C08F 28/02

(86) International application number:
**PCT/JP93/00893**

(87) International publication number:
**WO 94/00495 (06.01.1994 Gazette 1994/02)**

(54) **PROCESS FOR PRODUCING CLEAR SULFUR-CONTAINING POLYMER**

VERFAHREN ZUR HERSTELLUNG EINES KLARES SCHWEFEL ENTHALTENDES POLYMER

PROCEDE DE PRODUCTION D'UN POLYMERE LIMPIDE CONTENANT DU SOUFRE

(84) Designated Contracting States:
**DE ES FR GB IT**

(30) Priority: **30.06.1992 JP 172793/92**

(43) Date of publication of application:
**10.08.1994 Bulletin 1994/32**

(73) Proprietor: **TORAY INDUSTRIES, INC.**
**Tokyo 103 (JP)**

(72) Inventors:
- **IGUCHI, Yuichiro 24-8, Ichiriyama 1-chome Shiga-ken 520 (JP)**
- **BABA, Setsuo 10-A1-13, Sonoyama 2-chome Shiga-ken 520 (JP)**
- **OKA, Koichiro 16-27, Nakahozumi 2-chome Osaka 567 (JP)**

(74) Representative: **Coleiro, Raymond et al**
**MEWBURN ELLIS**
**York House**
**23 Kingsway**
**London WC2B 6HP (GB)**

(56) References cited:
**JP-A- 2 113 005**
**JP-A- 4 351 612**
**JP-A-61 134 701**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 609 454 B1

Printed by Jouve, 75001 PARIS (FR)

## Description

The present invention relates to a method of producing a transparent polymer which is preferably used for optical applications represented by plastic lenses such as a corrective lens, a sunglasses lens, a fashion lens, a camera lens, an optical device lens or a prism.

The present invention also relates to a method of producing a transparent polymer which is useful as an adhesive for bonding optical articles.

An olefin thermosetting resin generally has excellent thermal resistance and chemical resistance.

Although diethylene glycol bisacrylcarbonate is widely used in optical applications such as in spectacle lenses, it causes a problem, with respect to its low refractive index, when attempting to decrease the thickness and weight of a lens.

In order to solve this problem, resins containing sulfur atoms have been proposed (JP-A-63-316766, JP-A-63-162671 and JP-A-63-188660). Such resins may be methacrylate polymers and chain transfer agents may be employed during their formation; see JP-A-61-134701 and EP-A-0394495.

A resin having a refractive index of 1.62 to 1.64 is also disclosed in JP-A-02-158612.

However, when a resin is produced by radical polymerization of a monomer containing sulfur atoms, critical defects such as coloring of the obtained resin and internal strain sometimes occur in use for optical applications.

As a result of intensive research into a method of obtaining a transparent polymer from a (meth)acrylate monomer containing a sulfur atom, a method was found for producing a sulfur-containing transparent polymer which is less colored during polymerization (i.e., improved in hue), which is hardly yellowed under conditions of use, and which has a high visible light transmittance, a high refractive index and a light weight.

The present invention provides a method of producing a sulfur-containing transparent polymer by polymerization of a composition containing a (meth)acrylate monomer containing sulfur in its molecule, which is preferably a monomer containing at least one thiol methacrylate in its molecule, the method comprising radical polymerization of a composition containing, in addition to the (meth)acrylate compound, a compound (a) having a mercapto group and a compound (b) having a phenolic OH group used as compounds selected from radical chain transfer and radical trapping compounds, which compounds (a) and (b) are together present in a total amount of 0.1 to 7.0% by weight of the total composition, including the monomer.

The meth(acrylate) monomer containing sulfur in its molecule used in the method of the present invention may contain at least one sulfur atom, and is obtained by reacting a compound containing a sulfur atom and a hydroxyl group or a compound containing a mercapto group and (meth)acrylic acid, (meth )acrylate or (meth)acrylic halide in the presence of an alkali or acid.

Examples of the (meth)acrylate monomer containing at least one sulfur atom in its molecule used in the method of the present invention include the compounds below.

Examples of compounds each having a (meth)acrylate group include the following compounds:

(meth)acrylate compounds such as methyl mercaptan, ethyl mercaptan, thiophenol, mercaptoethyleneoxybenzene, mercaptopropyleneoxybenzene, mercaptoethylene thiomethylenebenzene, mercaptopropylene thiomethylenebenzene, hydroxyethylene thiobenzene, hydroxypropylene thiobenzene, hydroxyethylene thiomethylenebenzene and hydroxypropylene thiomethylenebenzene (meth)acrylates; and compounds obtained by substituting the benzene rings of the (meth)acrylate compounds with naphthalene or diphenyl rings.

Examples of compounds each having at least two (meth)acrylate groups which are used as the (meth)acrylate monomer containing at least one sulfur atom in its molecule in the method of the present invention include the following compounds:

(meth)acrylate compounds such as 1,2-dimercaptoethane, 1,3-dimercaptopropane, 1,4-dimercaptobutane, 2-mercaptoethanol, mercaptoethylsulfide, mercaptoethyl ether, hydroxyethylsulfide, pentaerythritol tetrakisthioglycolate, pentaerythritol tetrakisthiopropionate, 4,4-hydroxyphenylsulfide, 1,4-bis(hydroxyethylenethio)benzene, 1,4-benzenedithiol, 1,3-benzenedithiol, 1,2-benzenedithiol, 4-t-butyl-1,2-benzenedithiol, 1,2-bis(mercaptomethylene)benzene, 1,3-bis(mercaptomethylene)benzene, 1,4-bis(mercaptomethylene)benzene, 1,2-bis(mercaptoethylene)benzene, 1,3-bis(mercaptoethylene)benzene, 1,4-bis(mercaptoethylene)benzene, 1,2-bis(mercaptomethylenethio)benzene, 1,3-bis(mercaptomethylenethio)benzene, 1,4-bis(mercaptomethylenethio)benzene, 1,2-bis(2-mercaptoethylenethio)benzene, 1,3-bis(2-mercaptoethylenethio)benzene, 1,4-bis(2-mercaptoethylenethio)benzene, 1,2-bis(2-mercaptoethylenethiomethylene)benzene, 1,3-bis(2-mercaptoethylenethiomethylene)benzene, 1,4-bis(2-mercaptoethylenethiomethylene)benzene, 4,4-thiodithiophenol, 4,4-biphenyldithiol, 1,2-bis(mercaptomethyleneoxy)benzene, 1,3-bis(mercaptomethyleneoxy)benzene, 1,4-bis(mercaptomethyleneoxy)benzene, 1,2-bis(mercaptoethyleneoxy) benzene, 1,3-bis(mercaptoethyleneoxy)benzene, 1,4-bis(mercaptoethyleneoxy)benzene, 1,4-bis(hydroxyethylenethio)benzene, 1,4-bis(2-hydroxyethylenethiomethylene)benzene, 1,4-bis(2-mercaptoethyleneoxymethylene)benzene and 1,3,5-trimercaptobenzene.

A compound having a thiol (meth)acrylate group is preferably used as the (meth)acrylate compound in the method

of the present invention so that a resin having a high refractive index can be obtained.

It is also preferred for obtaining a polymer having high hardness and resistance to thermal softening to use a compound having at least two (meth)acrylate groups.

During investigations leading to the present invention, it was found that conventional radical polymerization of a (meth) acrylate monomer containing at least one sulfur atom in its molecule produces a polymer which is easily tinged with yellow or red, and cannot easily produce a polymer having a uniform hue.

We found that the hue of the polymer produced by polymerization can be stably improved by a method of adding mercapto and phenolic compounds as compounds selected from chain transfer compounds and radical trapping compounds.

Examples of the chain transfer compounds and radical trapping compounds used in the present invention are given below.

Mercaptan compounds such as ethyl mercaptan, hexyl mercaptan, octyl mercaptan, dodecyl mercaptan, stearyl mercaptan, mercaptoethanol, 1,2-ethanedithiol, 1,3-propanedithiol, 1,6-hexanedithiol, 1,12-dodecanedithiol, mercaptomethylsulfide, 2-mercaptoethylsulfide, 3-mercaptopropylsulfide, 6-mercaptohexylsulfide, 1,2-bis-2-mercaptoethylthioethane, 1,2-bis-3-mercaptopropylthioethane, 1,3-bis-2-mercaptoethylthiopropane, 1,4-bis-2-mercaptoethylthiobutane, 1,6-bis-2-mercaptoethylthiohexane, bis-2-(2-mercaptoethylthio)ethylsulfide, 2-mercaptoethyl ether, 3-mercaptopropyl ether, 6-mercaptohexyl ether, 1,4-cyclohexanedithiol, bis-2-mercaptoethoxymethane, 1,2-bis-2-mercaptoethoxyethane, bis-2-(2-mercaptoethoxy)ethyl ether, 1,4-benzenedithiol, 1,3-benzenedithiol, 1,2-benzenedithiol, 4-t-butyl-1,2-benzenedithiol, 1,2-bis(mercaptomethylene)benzene, 1,3-bis(mercaptomethylene)benzene, 1,4-bis(mercaptomethylene)benzene, 1,2-bis(mercaptoethylene)benzene, 1,3-bis(mercaptoethylene)benzene, 1,4-bis(mercaptoethylene)benzene, 1,2-bis(mercaptomethylenethio)benzene, 1,3-bis(mercaptomethylenethio)benzene, 1,4-bis(mercaptomethylenethio)benzene, 1,2-bis(2-mercaptoethylenethio)benzene, 1,3-bis(2-mercaptoethylenethio)benzene, 1,4-bis(2-mercaptoethylenethio)benzene, 1,2-bis(2-mercaptoethylenethiomethylene)benzene, 1,3-bis(2-mercaptoethylenethiomethylene)benzene, 1,4-bis(2-mercaptoethylenethiomethylene)benzene, 1,2-bis(mercaptomethyleneoxy)benzene, 1,3-bis(mercaptomethyleneoxy)benzene, 1,4-bis(mercaptomethyleneoxy)benzene, 1,2-bis(2-mercaptoethyleneoxy)benzene, 1,3-bis(2-mercaptoethyleneoxy)benzene, 1,4-bis(2-mercaptoethyleneoxy)benzene, 4,4-thiodithiophenol, 4,4-biphenyldithiol, 1,3,5-trimercaptobenzene, trimercaptoethylisocyanurate, pentaerythritol tetrathioglycolate, pentaerythritol trithioglycolate, pentaerythritol dithioglycolate, pentaerythritol tetramercaptopropionate, pentaerythritol trimercaptopropionate, pentaerythritol dimercaptopropionate, trimethylolpropane trithioglycolate, trimethylolpropane dithioglycolate, trimethylolpropane trimercaptopropionate, trimethylolpropane dimercaptopropionate and mercaptopropylisocyanurate.

So-called polymerization inhibitors or antioxidants each having a phenolic OH group, such as 2,6-di-t-butyl-4-methylphenol, 4-methoxyphenol, 4-t-butylcatechol or hydroquinone.

It was also found that the use of a mercaptan compound and a compound having a phenolic OH group further improves the transparency of the resin produced.

The total amount of the chain transfer and radical trapping compounds used in the method of the present invention is preferably at least 0.1% by weight, more preferably at least 1.0% by weight, by weight of the total composition. If the amount is less than 0.1% by weight, the hue of the polymer produced by polymerization cannot be easily improved. If the amount of the chain transfer compound and radical trapping compound used in the present invention is large, the mechanical properties of the polymer produced by polymerization deteriorates, or these compounds possibly bleed out during use. Thus, the amount of these compounds in total is preferably less than 7.0% by weight of the total composition. Furthermore, the ratio of the total moles of the mercapto groups and phenolic OH groups of the compounds added to the moles of (meth)acrylate groups preferably satisfies the following reaction:

$$0.01 < \frac{\text{(moles of mercapto groups) + (moles of phenolic OH groups)}}{\text{moles of (meth)acrylate groups}} < 0.07$$

In this case, the mercapto compound and the compound having a phenolic OH group are preferably used in amounts of 1.0 to 5.0 % by weight and 0.1 to 1.0 % by weight, respectively, by weight of the total composition.

Copolymerization can be effected by adding another monomer which is radical-polymerizable to the (metha)acrylate monomer containing at least one sulfur atom. The monomer added is not limited so far as it is an olefin compound. (Meth)acrylic compounds, styrene compounds, acrylonitrile and N-phenylmaleimide are preferred. Examples of such compounds include methyl (meth)acrylate, ethyl (meth)acrylate, propyl (meth)acrylate, benzyl (meth)acrylate, phenyl (meth)acrylate, cyclohexyl (meth) acrylate, cyclohexylmethylene (meth)acrylate, styrene, vinylnaphthalene, halogenated styrene and $\alpha$-methylstyrene.

When the resin produced is used for application which requires a polishing process and a surface coating process, copolymerization with a monomer having at least two radical-polymerizable functional groups in its molecule can produce a resin having excellent thermal resistance and a crosslinked structure. The monomer having at least two radical-polymerizable functional groups in its molecule is not limited. Examples of such a monomer include divinylbenzene, diallylphthalate, ethylene glycol di (meth)acrylate, diethylene glycol di(meth)acrylate, triethylene glycol di(meth) acrylate, bisphenol A-di(meth)acrylate, bisphenol A-dihydroxyethyl (meth) acrylate, tetrabromo-bisphenol A-di(meth)acrylate, tetrabromo-bisphenol A-dihydroxyethyl (meth)acrylate, triallylisocyanurate, pentaerythritol tetrakis (meth)acrylate, pentaerythritol tris (meth)acrylate and diethylene glycol bisallylcarbonate.

However, the amount of the monomer added for copolymerization is preferably not more than 50 % by weight of the total of the monomer composition from the viewpoint of the optical characteristics of the resin obtained.

Additives such as an ultraviolet absorber and an antioxidant are added to the adjusted monomers obtained so as to prevent light or thermal yellowing of the polymer produced by polymerization under the conditions of use.

An optical polymerization initiator such as benzophenone or a thermal polymerization initiator such as a peroxide or azo compound is generally added for facilitating polymerization in the subsequent polymerization process.

Although various known polymerization initiators can be used, a desired reaction temperature is selected for use. Examples of such initiators include benzoylperoxide, di-iso-propylperoxycarbonate, di-iso-propylperoxydicarbonate, di-2-ethylhexylperoxydicarbonate, di-n-propylperoxydicarbonate, t-butylperoxy-2-hexylhexanate and azobisisobutyronitrile.

The transparent polymer of the present invention can be produced by polymerization using the adjusted monomer obtained. Polymerization using a mold is described below as an example.

The cavity between two molds having a constant shape is filled with the adjusted monomer obtained. Optical or thermal polymerization is then performed to shape the form of the molds. Although each of the molds is made of glass, ceramics or a metal, glass, particularly glass having reinformed surfaces is generally used.

When a plastic lens is produced, a mold cavity is frequently formed by two opposite glass molds and a gasket for providing the plastic lens with a constant thickness and preventing leakage of the adjusted monomers filling. The mold cavity can be filled with the adjusted monomers by a method of injecting the adjusted monomers through a needle such as an injection needle which is inserted between the gasket and the glass molds.

Polymerization is then performed by applying active light such as ultraviolet light to the molds filled with the adjusted monomers, or heating the molds in an oven or a liquid bath. A combined method comprising optical polymerization and then thermal polymerization or thermal polymerization and then optical polymerization can also be used. In the optical polymerization, light containing a large quantity of ultraviolet light, such as light emitted from a mercury lamp as a light source, is generally applied to the molds. In the thermal polymerization, conditions such that the temperature is gradually increased from about room temperature to about 100°C over several hours to several tens hours are preferred for maintaining the optical uniformity and quality of the polymerization product (such as a plastic lens) and improving the reproducibility.

The sulfur-containing transparent polymer containing sulfur in its polymer molecule can be produced by the above-described processes. When the polymer obtained is used for a plastic lens, various coating processes for improving damage resistance by providing a hard coating layer on the surface, and increasing light transmittance by providing a multi-coat layer are combined for further increasing the value as the plastic lens.

The optical resin obtained by a method in accordance with the present invention is preferably used for a spectacle lens, a camera lens, a pickup lens of a compact disk and other lenses for optical devices.

Preferred methods embodying the invention will now be described in more detail below with reference to the following Examples.

In the Examples, yellowness YI was measured by Color Computer SM-3 produced by Suga Shikenki Co., Ltd. The yellowness YI is an index obtained by the equation given below and indicating the yellowness of the light transmitted by a sample. The greater is the Y1 value, the higher the yellowness becomes.

$$Y1 = \{100 (1.28 X - 1.062 Z)\}/Y$$

X, Y, Z: tristimulus values of color

Total light transmittance was measured by an automatic direct-reading haze computer produced by Suga Shikenki Co., Ltd. Assuming that the quantity of incident light and the quantity of transmitted light, both of which were received by an integrating sphere, were T1 and T2, respectively, the total light transmittance Tt is obtained by the following equation:

$$Tt = 100\ T2/T1$$

Light resistance was determined from a difference Y1 (see the equation below) between yellowness (Y1)2 after irradiation of a sample with carbon arc light for 60 hours using an Ultraviolet Regular Life Fadeometer FA-3 produced

by Suga Shikenki Co., Ltd. and yellowness (Y1)1 before the irradiation.

$$\Delta Y1 = (Y1)2 - (Y1)1$$

Refractive index was measured using a Pulfrich refractometer.

Example 1

0.5 % by weight of benzoylperoxide was added to a monomer composition comprising 55.0 % by weight of a compound having a structure shown by formula 1 below, 40.0 % by weight of styrene, 3.5 % by weight of mercaptoethylsulfide and 1.0 % by weight of t-butylhydroxytoluene. A mold comprising two glass plates and a polyester tape was then filled with the resultant mixture, and was heated to 40 to 110°C over 14 hours.

The mold was then removed to obtain a transparent resin having a thickness of 3 mm.

The thus-obtained resin was evaluated with respect to yellowness, total light transmittance, light resistance and refractive index. The results obtained are shown in Table 1.

Example 2

0.5 % by weight of benzoylperoxide was added to a monomer composition comprising 90.0 % by weight of a compound having a structure shown by formula 2 below, 5 % by weight of divinylbenzene, 4.0 % by weight of mercaptoethylsulfide and 0.5 % by weight of t-butylhydroxytoluene. A resin plate was then produced and evaluated by the same method as that employed in Example 1. The results obtained are shown in Table 1.

Example 3

0.5 % by weight of benzoylperoxide was added to a monomer composition comprising 90.0 % by weight of a compound having a structure shown by formula 3 below, 5 % by weight of styrene, 3.5 % by weight of pentaerythritol tetrakisthiopropionate and 1.0 % by weight of t-butylhydroxytoluene. A resin plate was then produced and evaluated by the same method as in Example 1. The results obtained are shown in Table 1.

Example 4

0.1 % by weight of benzoylperoxide was added to a monomer composition comprising 89.7 % by weight of a compound having a structure shown by formula 3, 7.5 % by weight of α-methylstyrene, 2.5 % by weight of pentaerythritol tetrakisthioglycolate and 0.2 % by weight of t-butylhydroxytoluene. A resin plate was then produced and evaluated by the same method as in Example 1. The results obtained are shown in Table 1.

Comparative Example 1

0.49 % by weight of benzoylperoxide was added to a monomer composition comprising 59.5 % by weight of a compound having a structure shown by formula 1, 40.0 % by weight of styrene and 0.01 % by weight of p-methoxyphenol. A resin plate was then produced and evaluated by the same method as in Example 1. The results obtained are shown in Table 1. Comparative Example 2

0.5 % by weight of benzoylperoxide was added to a monomer composition comprising 90.0 % by weight of a compound having a structure shown by formula 2, 9.48 % by weight of divinylbenzene and 0.02 % by weight of t-butylhydroxytoluene. A resin plate was then produced and evaluated by the same method as in Example 1. The results obtained are shown in Table 1.

Comparative Example 3

0.5 % by weight of benzoylperoxide was added to a monomer composition comprising 94.49% by weight of a compound having a structure shown by formula 3, 5.0 % by weight of styrene and 0.01 % by weight of t-butylhydroxytoluene. A resin plate was then produced and evaluated by the same method as in Example 1. The results obtained are shown in Table 1.

Comparative Example 4

0.1 % by weight of benzoylperoxide was added to a monomer composition comprising 91.39 % by weight of a compound having a structure shown by formula 3, 8.5 % by weight of α-methylstyrene, and 0.01 % by weight of t-butylhydroxytoluene. A resin plate was then produced and evaluated by the same method as in Example 1. The results obtained are shown in Table 1.

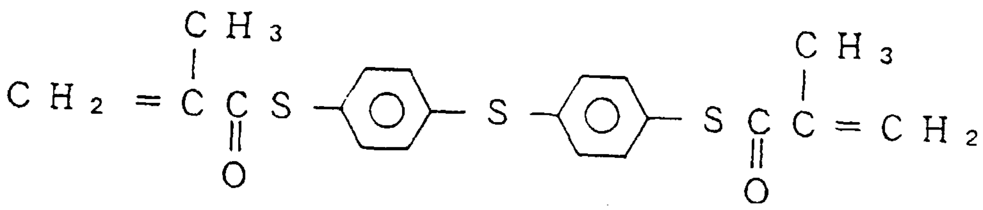 (1)

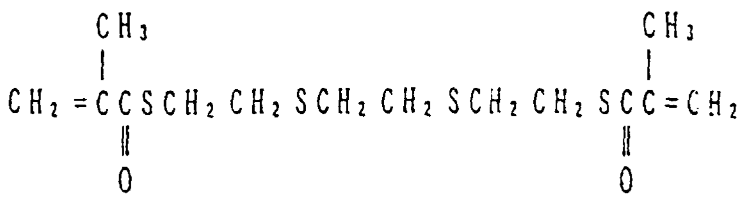 (2)

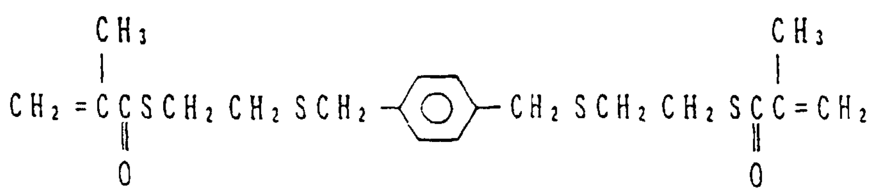 (3)

Table 1

| | Yellowness | Total light transmittance | Light resistance | Refractive index |
|---|---|---|---|---|
| Example 1 | 2.0 | 88.0 | 24 | 1.65 |
| Example 2 | 1.9 | 88.1 | 0.8 | 1.63 |
| Example 3 | 1.6 | 88.1 | 1.5 | 1.65 |
| Example 4 | 1.6 | 88.0 | 1.5 | 1.65 |
| Comp. Ex.1 | 3.1 | 87.0 | 49 | 1.65 |
| Comp. Ex.2 | 2.9 | 86.6 | 1.7 | 1.63 |
| Comp. Ex.3 | 2.8 | 86.0 | 2.9 | 1.65 |
| Comp. Ex.4 | 3.1 | 86.9 | 3.1 | 1.65 |

As can be seen from the above, polymers obtained by polymerization methods embodying the invention are less colored and a polymer which is hardly yellowed during use and which has high total light transmittance, high refractive index and light weight can be obtained.

## Claims

1. A method of producing a sulfur-containing transparent polymer by polymerizing a composition comprising a (meth) acrylate monomer containing sulfur in its molecule, characterized by radical polymerization of a composition containing, in addition to the (meth)acrylate monomer, a compound (a) having a mercapto group and a compound (b) having a phenolic OH group used as compounds selected from radical chain transfer and radical trapping compounds, which compounds (a) and (b) are together present in a total amount of 0.1 to 7.0% by weight of the total composition, including the monomer.

2. A method according to Claim 1, wherein the (meth)acrylate monomer containing sulfur in its molecule is a monomer containing at least one thiol methacrylate group in its molecule.

3. A method according to Claim 1 or Claim 2, wherein the compounds (a) and (b) are present in the composition in respective amounts, by weight of the total weight of the composition, of 1.0 to 5.0, and 0.1 to 1.0%, % by weight.

**Patentansprüche**

1. Verfahren zur Herstellung eines schwefelhältigen transparenten Polymers durch Polymerisation einer Zusammensetzung, die ein (Meth)Acrylatmonomer umfaßt, das Schwefel in seinem Molekül enthält, gekennzeichnet durch die radikalische Polymerisation einer Zusammensetzung, die neben dem (Meth)Acrylatmonomer eine Verbindung (a) mit einer Mercaptogruppe und eine Verbindung (b) mit einer phenolischen OH-Gruppe enthält, die als Verbindungen ausgewählt aus Radikalkettenüberträgern und Radikalfängern eingesetzt werden, wobei die Verbindungen (a) und (b) zusammen in einer Gesamtmenge von 0,1 bis 7,0 Gew.-%, bezogen auf das Gesamtgewicht der Zusammensetzung einschließlich des Monomers, vorhanden sind.

2. Verfahren nach Anspruch 1, worin das (Meth)Acrylatmonomer, das Schwefel in seinem Molekül enthält, ein Monomer ist, das zumindest eine Thiolmethacrylat-Gruppe in seinem Molekül enthält.

3. Verfahren nach Anspruch 1 oder 2, worin die Verbindungen (a) und (b) in der Zusammensetzung jeweils in einer Menge von 1,0 bis 5,0 Gew.-% bzw. 0,1 bis 1,0 Gew.-%, bezogen auf das Gesamtgewicht der Zusammensetzung, vorhanden sind.

**Revendications**

1. Méthode de production d'un polymère transparent contenant du soufre par polymérisation d'une composition comprenant un monomère de (meth)acrylate contenant du soufre dans sa molécule, caractérisée par la polymérisation radicalaire d'une composition contenant, en plus du monomère de (meth)acrylate, un composé (a) ayant un groupe mercapto et un composé (b) ayant un groupe OH phénolique que l'on utilise comme composés sélectionnés parmi des composés de transfert de chaîne de radicaux et piégeant les radicaux, lesquels composés (a) et (b) sont présents ensemble en une quantité totale de 0,1 à 7,0% en poids de la composition totale, comprenant le monomère.

2. Méthode selon la revendication 1, où le monomère de (meth)acrylate contenant du soufre dans sa molécule est un monomère contenant au moins un groupe thiol méthacrylate dans sa molécule.

3. Méthode selon la revendication 1 ou la revendication 2, où les composés (a) et (b) sont présents dans la composition en quantités respectives, en poids du poids total de la composition de 1,0 à 5,0, et de 0,1 à 1,0% en poids.